(19) Europäisches Patentamt
European Patent Office
Office européen des brevets

(11) EP 1 630 185 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**22.12.2010 Patentblatt 2010/51**

(51) Int Cl.:
***C08G 18/50*** *(2006.01)* ***C08G 18/18*** *(2006.01)*
***C08G 18/32*** *(2006.01)*

(45) Hinweis auf die Patenterteilung:
**20.02.2008 Patentblatt 2008/08**

(21) Anmeldenummer: **05015599.3**

(22) Anmeldetag: **19.07.2005**

(54) **Verfahren zur Herstellung von Polyurethan-Weichschaumstoffen**

Process of manufacture of polyurethane slabstock foam

Procedé de manufacture de mousse de polyurethane flexible

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.08.2004 DE 102004041299**

(43) Veröffentlichungstag der Anmeldung:
**01.03.2006 Patentblatt 2006/09**

(73) Patentinhaber: **BASF SE**
**67056 Ludwigshafen (DE)**

(72) Erfinder:
- **Bauer, Stephan, Dr.**
  **49179 Ostercappeln (DE)**
- **Bleuel, Elke, Dr.**
  **01127 Dresden (DE)**
- **Eisenhardt, Andrea, Dr.**
  **49377 Vechta (DE)**
- **Schuster, Marita**
  **32351 Stemwede-Haldem (DE)**
- **Wagner, Klaus**
  **49419 Wagenfeld (DE)**
- **Wenzel, Marion**
  **32351 Stemwede-Haldem (DE)**

(56) Entgegenhaltungen:
**EP-A- 0 539 819** **EP-A- 0 708 126**
**EP-A- 1 022 298** **WO-A-03/029320**

EP 1 630 185 B2

## Beschreibung

Gegenstand der Erfindung ist ein Verfahren zur Herstellung von Polyurethan-Weichschaumstoffen mit einer verringerten Emission von organischen Stoffen.

Polyurethan-Weichschaumstoffe werden in vielen technischen Gebieten, insbesondere zur Polsterung oder Geräuschdämmung, eingesetzt. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln sowie gegebenenfalls Katalysatoren und üblichen Hilfs- und/oder Zusatzstoffen.

Die meisten Polyurethan-Schaumstoffe emittieren flüchtige organische Verbindungen. Dabei kann es sich beispielsweise um Katalysatoren, Abbauprodukte oder nicht umgesetzte flüchtige Einsatzstoffe handeln. Diese Emissionen werden für viele Einsatzgebiete der Poiyurethan-Weichschaumstoffe, beispielsweise beim Einsatz in Kraftfahrzeuginnenräumen oder bei der Anwendung in Möbeln oder Matratzen, als Qualitätsmangel empfunden.

Der Markt verlangt daher zunehmend nach emissionsarmen Schaumstoffen. Insbesondere die Automobilindustrie fordert in den nächsten Jahren eine deutliche Reduktion von flüchtigen organischen (VOC) und kondensierbaren Verbindungen (Fogging oder FOG) in Schaumstoffen.

Es hat in der Vergangenheit nicht an Versuchen gefehlt, die Emissionsneigung der Polyurethan-Weichschaumstoffe zu vermindern.

Da als eine wesentliche Quelle der Emissionen flüchtige Aminkatalysatoren ausgemacht wurden, erfolgte die Verwendung von einbaubaren Katalysatoren, das heißt solchen, die neben der tertiären Aminogruppe weitere, mit Isocyanatgruppen reaktive Gruppen aufweisen, über die sie in das Polymergerüst eingebaut werden. Derartige Katalysatoren sind beispielsweise in EP-A-451 826 und EP-A-677 540 beschrieben. Nachteilig bei der Verwendung von einbaubaren Katalysatoren ist insbesondere, dass die in das Polymergerüst eingebauten Katalysatoren die Rückspaltung der Urethangruppen katalysieren. Dadurch verschlechtern sich zum einen die mechanischen Eigenschaften der Polyurethane mit der Zeit, zum anderen können bei der Rückspaltung flüchtige Verbindungen entstehen, die ihrerseits wieder aus dem Schaum emittieren können.

Ein weiterer Nachteil vieler einbaubarer Katalysatoren ist der frühzeitige Einbau in die Polymerkette. Dadurch sind die Katalysatoren in der Reaktionsmischung nicht mehr frei beweglich, was zu Inhomogenitäten im Polymergerüst führen kann.

Eine weitere Quelle für Emissionen sind die zur Stabilisierung der zur Herstellung der Polyurethane eingesetzten Polyole, insbesondere der Polyetheralkohole, gegen thermooxidativen Abbau verwendeten Verbindungen. Diese Verbindungen werden häufig als Antioxidantien bezeichnet. Durch diese Verbindungen soll auch die Kemverfärbung bzw. Kernverbrennung bei der Herstellung der Polyurethan-Schaumstoffe verhindert werden. Auch hier werden häufig sterisch gehinderte Amine, zumeist in Verbindung mit anderen Stabilisatoren, wie sterisch gehinderten Phenolen oder Phosphoratome enthaltenden Verbindungen, eingesetzt.

In Zukunft ist zu erwarten, dass im Automobilbau die Emission insgesamt deutlich gesenkt werden und die Emission von Aminen nicht mehr akzeptiert wird, ohne dass es Abstriche an der Qualität der Polyurethane geben darf. Weiterhin ist bei Polyurethanen in Kraftfahrzeuginnenräumen das sogenannte Fogging zu minimieren. Darunter versteht man die Emission von Verbindungen, die anschließend im Fahrzeuginnenraum, beispielsweise an der Windschutzscheibe, kondensieren können. Auch das Fogging wird als Qualitätsmangel angesehen.

Es war daher Aufgabe der vorliegenden Erfindung, ein Verfahren zur Herstellung von Polyurethan-Weichschaumstoffen, bei dem Schaumstoffe mit einer geringen Emission resultieren, bereitzustellen.

Die Aufgabe konnte gelöst werden durch die Verwendung von speziellen nicht flüchtigen Aminkatalysatoren.

Gegenstand der Erfindung ist ein Verfahren zur Herstellung von Polyurethan-Weichschaumstoffen mit verringerter Emission durch Umsetzung von

a) Polyisocyanaten mit
b) Verbindungen mit mindestens zwei mit Isocyanatgruppen reaktiven Wasserstoffatomen in Anwesenheit von
c) Katalysatoren
dadurch gekennzeichnet, dass als Katalysator c) mindestens eine Verbindung der allgemeinen Formel (I)

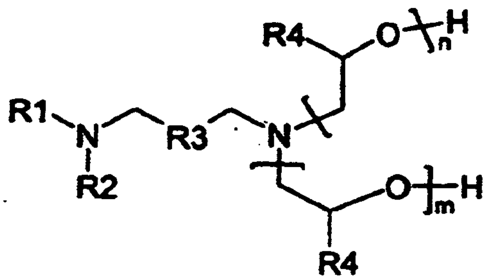

(I)

mit

R1, R2 = $-C_aH_{2a+1}$ mit a = 1 - 4 für acylische Gruppen

R1-R2 = $-C_bH_cN_d-$ mit b = 3 - 7, c = 6 - 14, d = 0 - 2 für cyclische Gruppen

R3 = $C_eH_fO_g$ mit e = 0 - 4, f = 0 - 8, g = 0 - 2

R4 = -H, $-CH_3$, $-C_2H_5$

n, m = gleich oder verschieden 1 - 5

eingesetzt wird, und dass die Verbindungen mit mindestens zwei mit Isocyanatgruppen reaktiven Wasserstoffatomen b) Stabilisatoren gegen thermooxidativen Abbau enthalten, die frei von Aminogruppen sind, und diese aus 20 bis 90 Gew.-% sterisch gehinderten Phenolderivaten und 10 bis 70 Gew.-% Benzofuran-2-on-derivaten bestehen.

Die Verbindungen der allgemeinen Formel (I) können vorzugsweise durch Umsetzung der entsprechenden Amine mit Alkylenoxiden hergestellt werden. Zur Durchführung dieser Umsetzung kann das Amin in einem Alkohol, beispielsweise in einem Polyetheralkohol, gelöst werden.

Gegebenfalls können als Katalysatoren c) in Kombination mit den Verbindungen der allgemeinen Formel (I) weitere Verbindungen mit mindestens einer tertiären Aminogruppe und mindestens einer mit Isocyanatgruppen reaktiven Gruppe eingesetzt werden.

Weiterhin können in Kombination mit den Katalysatoren der allgemeinen Formel (I) auch metallorganische Verbindungen, insbesondere Zinn- und Zinkverbindungen, eingesetzt werden, insbesondere Zinn(II)- und Zinksalz der 2-Ethylhexansäure und Rizinolsäure.

Vorzugsweise handelt es sich bei den mit Isocyanatgruppen reaktiven Gruppen der Katalysatoren c) um Hydroxyl- und/oder Aminogruppen, besonders bevorzugt um Hydroxylgruppen.

Als einbaubare oder hochmolekulare Katalysatoren c) sind beispielsweise zu nennen Dimethylaminoethanol, N,N-Dimethyl-N',N'-di(2-hydroxypropyl)-1,3-diaminopropan, N,N-Dimethylaminopropylamin, N,N,N'-Trimethyl-N-hydroxyethyl-bis(aminoethyl)ether, 6-Dimethylaminoethyl-1-hexanol, N-(2-Hydroxypropyl)imidazol, N-(3-Aminopropyl)-imidazol, Aminopropyl-2-methyl-imidazol, N,N,N'-Trimethylaminoethanolamin, 2-(2-(N,N-Dimethylaminoethoxy) ethanol, N-(Dimethyl-3-aminopropyl)harnstoffderivate und Alkylaminooxamide, wie Bis-(N-(N',N'-dimethylaminopropyl)) oxamid, Bis-(N-(N',N'-dimethylaminoethyl))oxamid, Bis-(N-(N',N'-Imidazolidinylpropyl))oxamid, Bis-(N-(N',N'-diethylaminoethyl))oxamid, Bis-(N-(N',N'-diethylaminopropyl))oxamid, Bis-(N-(N',N'-diethylaminoethyl))oxamid, Bis-(N-(N',N'-diethylimino-1-methylpropyl))oxamid, Bis-(N-(3-Morpholinopropylyl))oxamid und deren Umsetzungsprodukte mit Alkylenoxiden, vorzugsweise mit einem Molgewicht im Bereich zwischen 160 und 500 g/mol. Diese können einzeln oder in beliebigen Gemischen untereinander eingesetzt werden.

Derartige Katalysatoren und/oder Mischungen werden beispielsweise unter dem Namen Lupragen® DMEA, Lupragen® API, Toyocat® RX 20 und Toyocat® RX 21, DABCO® NE 400, DABCO® NE 500, DABCO® NE 600, DABCO® NE 1060 und DABCO® NE 2039, , Niax® EF 860, Niax® EF 890, Niax® EF 700, Niax® EF 705, Niax® EF 708, Niax® EF 600, Niax® EF 602 im Handel angeboten.

Besonders bevorzugt sind Verbindungen der allgemeinen Formel (I) und deren Mischungen mit mindestens einem der genannten einbaubaren Aminkatalysatoren.

Die Umsetzungsprodukte der genannten Amine mit Alkylenoxiden sind beispielsweise in DE 101 56 014 beschrieben. Die Produkte haben vorzugsweise eine Molmasse im Bereich zwischen 160 und 500 g/mol. Ihre Herstellung

erfolgt durch Umsetzung der entsprechenden Amine mit Alkylenoxiden. Dabei kann das Amin vor der Umsetzung mit einem Alkohol, beispielsweise einem Polyetheralkohol gemischt und diese Mischung mit Alkylenoxiden umgesetzt werden. Ihr Einsatz bei der Herstellung der Poly urethan-Weichschaumstoffe erfolgt vorzugsweise in einer Menge von 0,01 bis 10 Teilen, bevorzugt 0,02 bis 5,0 Gew.-% und ganz bevorzugt 0,05 bis 1,0 Gew.-% Teile, bezogen auf die Komponente b).

Die nicht mit Alkylenoxiden umgesetzten Katalysatoren c) werden in der für Katalysatoren üblichen Menge von 0,01 bis 2,0 Gew.-%, bevorzugt 0,01 bis 0,5 Gew.-% eingesetzt.

Die Verbindungen mit mindestens zwei mit Isocyanatgruppen enthalten reaktiven Wasserstoffatomen aminfreie Antioxidantien, das heißt solche, die keine Aminogruppen enthalten.

Antioxidantien bestehen aus 20 bis 90 Gew.-%, bevorzugt aus 50 bis 90 Gew.-% sterisch gehinderten Phenolderivaten und 10 bis 80 Gew.-%, bevorzugt aus 10 bis 40 Gew.-% Benzofuran-2-one-derivaten und 0 bis 30 Gew.-%, bevorzugt aus 0 bis 20 Gew.-% aus anderen aminfreien Antioxidantverbindungen, die kein Phenol abspalten.

Diese Verbindungen werden den Verbindungen mit mindestens zwei mit Isocyanatgruppen reaktiven Wasserstoffatomen zumeist unmittelbar nach der Herstellung zugesetzt. Bei Bedarf können unmittelbar vor der Umsetzung mit den Isocyanaten weitere Antioxidantien zugesetzt werden. Die Menge der Antioxidantien in den Verbindungen mit mindestens zwei mit Isocyanatgruppen reaktiven Wasserstoffatomen liegt üblicherweise im Bereich 100 bis 8000 ppm, bevorzugt 500 bis 5000 ppm

Die nach dem erfindungsgemäßen Verfahren hergestellten Polyurethan-Weichschäume weisen sehr geringe Werte von flüchtigen organischen (VOC) und kondensierbaren Verbindungen (Fogging) auf. Es konnten Werte für VOC von < 100 ppm und für Fogging von < 250 ppm erreicht werden.

Die Werte für VOC und Fogging wurden dabei mittels Thermodesorptionsanalyse bestimmt.

Bei der Thermodesorptionsanalyse (TDSA) werden geringe Materialmengen in einem Glasrohr definiert aufgeheizt, die dabei emittierenden flüchtigen Substanzen mit Hilfe eines Inertgasstromes in einen Gaschromatographen übergeführt und dort zunächst bei -150°C in der Kühlfalle (Liner) eines temperaturprogrammierbaren Verdampfers aufgefangen.

Nach Beendigung der Ausheizphase wird der Liner rasch auf 280°C erhitzt. Dabei verdampfen die aufgefangenen Substanzen, werden in der gaschromatographischen Trennsäule aufgetrennt und anschließend massenspektroskopisch detektiert.

Durch Kalibration mit Bezugssubstanzen ist eine halbquantitative Bestimmung der Emission, ausgedrückt als Massen in ppm, möglich.

Als quantitative Bezugssubstanzen werden Toluol für die VOC-Analyse und n-Hexadecan für den Fog-Wert verwendet. Anhand der Massenspektren und der Retentionszeit können unbekannte Substanzpeaks identifiziert werden.

Mit der hier beschriebenen Methode werden Substanzen im Siede- bzw. Elutionsbereich von Pentan (C5) bis etwa Eicosan (C20) erfasst und ausgewertet. Von diesen Substanzen ist anzunehmen, dass sie bei einer Analyse der Fahrzeuginnenraumluft nachweisbar sind.

Zur Bestimmung wird die Probe 30 Minuten bei 90°C ausgeheizt. Der VOC-Wert wird als Doppelbestimmung ermittelt. Als Ergebnis wird der höhere Wert der Zweifachbestimmung angegeben.

Zur Bestimmung des Fog-Wertes wird im Anschluss der VOC-Analyse die Probe mit dem höheren VOC-Wert im Desorptionsrohr belassen und nochmals 60 Minuten bei 120°C ausgeheizt.

Der Fog-Wert ist die Summe der sehr schwer flüchtigen Substanzen, die ab der Retentionszeit von n-Hexadecan eluieren. Er wird als Hexadecan-Äquivalent berechnet.

Es wird der Siedebereich von Substanzen bis mindestens des n-Alkans "C32" erfasst. Diese Substanzen können bei Raumtemperatur leicht kondensieren und wesentlich zum Foggingbelag an der Windschutzscheibe beitragen.

Die Festlegung der Grenzen für den VOC- und Fog-Bereich ist eine Konvention. Sie leitet sich aus Erfahrungen mit zahlreichen Analysen von Fahrzeug-Foggingkondensaten ab.

Demnach besteht Fogging hauptsächlich aus Substanzen, die oberhalb von etwa 280°C sieden (Siedepunkt n-Hexadecan = 286°C).

Durch das erfindungsgemäße Verfahren werden die Emissionen aus den Schaumstoffen verringert, ohne dass es zu einer Verschlechterung der übrigen Eigenschaften der Schaumstoffe kommt.

Zu den übrigen für das erfindungsgemäße Verfahren eingesetzten Ausgangsstoffen ist im einzelnen folgendes zu sagen.

Als Polyisocyanate a) kommen für das erfindungsgemäße Verfahren alle Isocyanate mit zwei oder mehr Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI), vorzugsweise TDI und MDI, besonders bevorzugt TDI, zum Einsatz. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate. Bevorzugte Prepolymere sind Urethangrupppen und Isocyanatgruppen enthaltende MDI-Prepolymere mit einem NCO-Gehalt zwischen 20 und 35 % bzw. deren Mischungen mit Polymethylenpolyphenylenpolyisocyanaten (Roh-MDI).

Als Verbindungen mit mindestens zwei aktiven Wasserstoffatomen b) werden insbesondere Polyesteralkohole und vorzugsweise Polyetherole mit einer Funktionalität von 2 bis 8, insbesondere von 2 bis 4, vorzugsweise 2 bis 3. und einem Molekulargewicht im Bereich von 400 bis 8500, vorzugsweise 1000 bis 6000 eingesetzt. Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glyzerin, Trimethylolpropan oder Pentaerythrit, sowie höherwertige Alkohole, wie Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Die Herstellung der Polyetheralkohole erfolgt üblicherweise durch katalytische Anlagerung von Alkylenoxiden, insbesondere Ethylenoxid und/oder Propylenoxid, an H-funktionelle Startsubstanzen. Als Katalysatoren werden vorzugsweise basische Verbindungen, insbesondere Hydroxide von Alkalimetallen, eingesetzt. In jüngerer Zeit werden häufig auch Multimetallcyanidverbindungen, auch als DMC-Katalysatoren bezeichnet, eingesetzt.

Als Polyetheralkohole können auch polymermodifizierte Polyetheralkohole eingesetzt werden. Diese werden zumeist durch in-situ-Polymerisation von olefinisch ungesättigten Monomeren, insbesondere Acrylnitril und/oder Styrol in den Polyetheralkoholen hergestellt. Zu den polymermodifizierten Polyetheralkoholen gehören auch Polyharnstoffdispersionen enthaltende Polyetheralkohole.

Die polymermodifizierten Polyetheralkohole haben vorzugsweise eine Hydroxylzahl im Bereich 10 bis 100 mg KOH/g, bevorzugt 15 bis 60 mg KOH/g, und vorzugsweise einen Feststoffanteil von 2 bis 60 Gew.-%, bevorzugt von 5 bis 50 Gew.-%.

Für bestimmte Einsatzgebiete kann es zweckmäßig sein, zur Herstellung der Polyurethan-Weichschaumstoffe neben den genannten Polyhydroxylverbindungen zusätzlich sogenannte Kettenverlängerungsmittel und/oder Vernetzungsmittel mitzuverwenden. Als derartige Mittel kommen polyfunktionelle, insbesondere di- und trifunktionelle Verbindungen mit Molekulargewichten von 62 bis 600, vorzugsweise 62 bis 300, in Betracht. Verwendet werden beispielsweise Di- und Trialkanolamine, wie Diethanolamin und Triethanolamin, aliphatische und aromatische Diamine, wie z. B. Ethylendiamin, Butylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, Propylenglykol, 1,4-Butylenglykol, 1,6-Hexamethylenglykol, Glyzerin und Trimethylolpropan.

Sofern Kettenverlängerungs- oder Vernetzungsmittel eingesetzt werden, kommen diese in Mengen von 1 bis 20 Gew.-Teilen, vorzugsweise von 3 bis 10 Gew.-Teilen pro 100 Gew.-Teile Polyhydroxylverbindungen zur Anwendung.

Als Treibmittel für das erfindungsgemäße Verfahren wird zumeist Wasser, das mit Isocyanatgruppen unter Bildung von Kohlendioxid reagiert, eingesetzt. Die Wassermengen, die zweckmäßigerweise verwendet werden, betragen, abhängig von der angestrebten Dichte der Schaumstoffe, 0,1 bis 8 Gewichtsteile, vorzugsweise 1,5 bis 5 Gewichtsteile, bezogen auf 100 Gewichtsteile Komponente b).

Im Gemisch mit Wasser können gegebenenfalls auch sogenannte physikalisch wirkende Treibmittel eingesetzt werden. Dies sind Flüssigkeiten, welche gegenüber den Rezepturbestandteilen inert sind und Siedepunkte unter 100°C, vorzugsweise unter 50°C, insbesondere zwischen -50°C und 30°C bei Atmosphärendruck aufweisen, so dass sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethlyether und Diethylether, Ketone, wie Aceton und Methylethylkleton, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Als Treibmittel kann auch Kohlendioxid eingesetzt werden, das vorzugsweise als Gas in den Ausgangskomponenten gelöst wird.

Bevorzugt werden Wasser und/ oder Kohlendioxid als Treibmittel verwendet.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyhydroxylverbindung.

Der Reaktionsmischung können auch noch Hilfsmittel und/oder Zusatzstoffe einverleibt werden. Genannt seien beispielsweise äußere und innere Trennmittel, Schaumstabilisatoren, Hydrolyseschutzmittel, Porenregler, fungistatisch und bakteriostatisch wirkende Substanzen, Farbstoffe, Pigmente, Füllstoffe, oberflächenaktive Stoffe und Flammschutzmittel.

Bei der technischen Herstellung von Polyurethan-Schaumstoffen ist es üblich, die Verbindungen mit mindestens zwei aktiven Wasserstoffatomen und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe (Polyolkomponente) zur Reaktion gebracht.

Bei der Herstellung der erfindungsgemäßen Polyurethane werden Isocyanat- und Polyolkomponente in einer solchen Menge zusammengebracht, dass der Index vorzugsweise zwischen 50 und 200, bevorzugt zwischen 70 bis 150 und insbesondere zwischen 80 bis 120 liegt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C.

Die nach dem erfindungsgemäßen Verfahren hergestellten Polyurethan-Weichschaumstoffe weisen, wie beschrieben, eine sehr niedrige Emission (VOC und FOG) bei den vom Markt geforderten mechanischen Eigenschaften und Alterungseigenschaften auf.

Sie zeigen bei Block bzw. Forminnentemperaturen von bis zu 165°C während dem Schäumprozess keine Kernverfärbungen und eine bessere Lichtstabilität.

Ihr Einsatz erfolgt vorzugsweise in Kraftfahrzeuginnenräumen sowie zur Herstellung von Möbeln und Matratzen.

Die Erfindung soll an den nachfolgenden Beispielen näher beschrieben werden.

Katalysator A:

216 kg eines Polyetheralkohols auf Basis von Glycerin, Propylenoxid und Ethylenoxid mit einer Hydroxylzahl von ca. 28 mg KOH/g wurden mit 123,4 kg N,N-Dimethylaminopropylamin versetzt und unter Katalyse mit 48 %-iger KOH mit 257,4 kg Propylenoxid bei 100 bis 105°C umgesetzt. Die Nachreaktion erfolgte bei 102°C bis zum Erreichen des Druckminimums. Anschließend wurde das Produkt mit Phosphorsäure/Wasser aufgearbeitet. Das Produkt hat eine Hydroxylzahl von 238 m KOH/g und eine Viskosität von 417 mPa·s

Katalysator B:

432 kg eines alkalischen Polyetheralkohols auf Basis von Glycerin, Propylenoxid und Ethylenoxid mit einer Gesamtalkalität von 0,29 % und einer Hydroxylzahl von ca. 27 mg KOH/g wurde mit 82,0 kg N,N-Dimethylaminopropylamin versetzt und das Gemisch ohne zusätzliche Katalyse mit 209,8 kg Propylenoxid bei 100 bis 105°C umgesetzt. Nachreaktion erfolgte bei 102°C bis zum Erreichen des Druckminimums. Anschließend wurde das Produkt mit Phosphorsäure/Wasser aufgearbeitet.

Herstellung der Polyurethan-Weichschaumstoffe

Vergleichsbeispiele 1 bis 3 und Beispiele 4 bis 6

Die in Tabelle 1 genannten Ausgangsprodukte wurden in den in Tabelle 1 aufgeführten Mengenverhältnissen zur Umsetzung gebracht.

Alle Komponenten außer dem Isocaynat Lupranat® T 80 A wurden zunächst durch intensives Mischen zu einer Polyolkomponente vereinigt. Danach wurde das Lupranat® T 80 A unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 1 aufgeführt.

Die folgenden Kennwerte sind nach den genannten Normen, Arbeits- und Prüfanweisungen bestimmt worden:

| | |
|---|---|
| Raumgewicht in kg/$m^3$ | DIN EN ISO 845 |
| VOC Rizinusölsäurezyklus in ppm | PB VWL 709 |
| FOG Rizinusölsäurezyklus in ppm | PB VWL 709 |
| Luftdurchlässigkeit in $dm^3$/min | DIN EN ISO 7231 |

| | |
|---|---|
| Stauchhärte, 40 % Verformung in kPa | DIN EN ISO 2439 |
| Eindruckhärte, 25 % Verformung | DIN EN ISO 2439 |
| Eindruckhärte, 40 % Verformung | DIN EN ISO 2439 |
| Eindruckhärte, 65 % Verformung | DIN EN ISO 2439 |
| Dehnung in % nach | DIN EN ISO 1798 |
| Zugfestigkeit in kPa | DIN EN ISO 1798 |
| Rückprall-Elastizität in % | DIN EN ISO 8307 |
| Druckverformungsrest in % | DIN EN ISO 3386 |
| Wet-Compression-Set | Arbeitsanweisung AA U10-131-041 vom 06.02.02 |

Die Bestimmung des Wet-Compression-Set erfolgte nach der Arbeitsanweisung AA U10-131-041 vom 06.02.02:

Mittels Messschieber bzw. Messtaster wird die Höhe an einer vorher markierten Stelle der Schaum-Prüflinge der Maße 50 mm x 50 mm x 25 mm bestimmt. Anschließend werden die Prüflinge zwischen zwei Druckplatten gelegt und durch Abstandsstücke von 7,5 mm auf diese Höhe mittels Einspannvorrichtung zusammen gedrückt.

Die Lagerung im Klimaschrank bei 50°C und 95 % rel. Luftfeuchtigkeit beginnt unmittelbar nach dem Einspannen. Nach 22 h werden die Schaum-Prüflinge in kürzester Zeit aus der Einspannvorrichtung entfernt und auf einer Oberfläche mit geringer Wärmeleitung (Tablett) zum entspannen im Normklima 30 min zwischengelagert. Anschließend wird die Resthöhe an der markierten Stelle mit dem gleichen Messmittel bestimmt.

Der Wet-Compression-Set bezieht sich auf die Verformung und wird wie folgt berechnet:

$$\text{Wet-Compression-Set} = (h_0 - h_R) * 100 / (h_0 - 7{,}5\ \text{mm})\ \text{in}\ \%$$

$h_0$ Ursprungshöhe in mm

$h_R$ Resthöhe des Prüfkörpers in mm

| Formulierung | | Vergleichsbeispiel 1 | Beispiel 4 |
|---|---|---|---|
| Lupranol® 2080 | MT | 100,00 | |
| Lupranol® 2082 | MT | | 100,00 |
| Wasser | MT | 4,35 | 4,35 |
| Tegostab® B 4900 | MT | 1,00 | 1,00 |
| Lupragen® N 201 | MT | 0,090 | |
| Lupragen® N 206 | MT | 0,030 | |
| Katalysator A | MT | | 1,20 |
| Kosmos® 29 | MT | 0,24 | 0,24 |
| Lupranat® T 80 A | Index | 112 | 112 |
| Verarbeitungverhalten | | | |
| Steigzeit | s | 85 | 75 |
| Steighöhe | mm | 861,4 | 931,7 |
| Rohdichte | kg/m$^3$ | 21,7 | 22,3 |
| Eindruckhärte B | | | |
| 25% Stauchung | N | 120 | 112 |
| 40% Stauchung | N | 145 | 139 |
| 65% Stauchung | N | 276 | 264 |

(fortgesetzt)

| Formulierung | | Vergleichsbeispiel 1 | Beispiel 4 |
|---|---|---|---|
| Zugfestigkeit | kPa | 90 | 102 |
| Bruchdehnung | % | 133 | 155 |
| Stauchhärte (40% Stauchung) | kPa | 3,6 | 3,5 |
| nach Feuchtwärmelagerung | kPa | 2,7 | 2,5 |
| Druckverformungsrest | % | 2,0 | 2,4 |
| nach Feuchtwärmelagerung | % | 3,2 | 4,3 |
| Wet Compression Set | % | 4,8 | 7,9 |
| Rückprallelastizität | % | 44 | 43 |
| Luftdurchlässigkeit | $dm^3/s$ | 2,247 | 1,343 |
| Gasförmige und kondensierbare Emissionen | | | |
| VOC nach DC-PB VWL 709 | | | |
| insgesamt | ppm | 50 | 4 |
| 1,4-Diazabicyclo[2.2.2]octan | ppm | 35 | 0 |
| Bis(2-dimethylaminoethyl)ether | ppm | 4 | 0 |
| Diphenylaminderivate | ppm | 3 | 0 |
| Fogging nach DC-PB VWL 709 | | | |
| insgesamt | ppm | 184 | 74 |
| Diphenylaminderivate | ppm | 102 | 0 |
| Formulierung | | Vergleichsbeispiel 2 | Beispiel 5 |
| Lupranol® 2095 (I) | MT | 60,00 | |
| Lupranol® 2095 (II) | MT | | 60,00 |
| Lupranol® 4895 (I) | MT | 40,00 | |
| Lupranol® 4895 (II) | MT | | 40,00 |
| Wasser, additiv | MT | 1,90 | 1,90 |
| Wasser gesamt | MT | 2,40 | 2,40 |
| DEOA 80%ige Lösung in Wasser | MT | 1,20 | 1,20 |
| Ortegol® 204 | MT | 1,00 | 1,00 |
| Silybyk® 9700 | MT | 0,60 | 0,60 |
| Lupragen® N 201 | MT | 0,06 | |
| Katalysator A | MT | | 0,10 |
| Komsos® 29 | MT | 0,24 | 0,24 |
| Lupranat® T80 A | Index | 112 | 112 |
| Verarbeitungverhalten | | | |
| Steigzeit | s | 98 | 105 |
| Steighöhe | mm | 835,5 | 812,3 |
| Rohdichte | $kg/m^3$ | 36,7 | 38,1 |

(fortgesetzt)

| Formulierung | | Vergleichsbeispiel 2 | Beispiel 5 |
|---|---|---|---|
| Eindruckhärte B | | | |
| 25% Stauchung | N | 127 | 143 |
| 40% Stauchung | N | 175 | 207 |
| 65% Stauchung | N | 369 | 450 |
| SAG-Faktor | | 2,91 | 3,15 |
| Zugfestigkeit | kPa | 131 | 122 |
| Bruchdehnung | % | 102 | 81 |
| Stauchhärte (40% Stauchung) | kPa | 4,4 | 5,0 |
| nach Feuchtwärmelagerung | kPa | 3,0 | 3,2 |
| Druckverformungsrest | % | 2,6 | 3,2 |
| nach Feuchtwärmelagerung | % | 12,8 | 14,8 |
| Wet Compression Set | % | 15,7 | 15,3 |
| Rückprallelastizität | % | 65 | 63 |
| Luftdurchlässigkeit | $dm^3/s$ | 1,19 | 1,21 |
| Gasförmige und kondensierbare Emissionen | | | |
| VOC nach DC-PB VWL 709 | | | |
| Insgesamt | ppm | 181 | 98 |
| 1,4-Diazabicyclo[2.2.2]octan | ppm | 13 | 0 |
| Diphenylaminderivate | ppm | 4 | 0 |
| Fogging nach DC-PB VWL 709 | | | |
| Insgesamt | ppm | 117 | 87 |
| Diphenylaminderivate | ppm | 48 | 0 |
| Formulierung | | Vergleichsbeispiel 3 | Beispiel 6 |
| Lupranol® 2090 (I) | MT | 86,45 | |
| Lupranol® 2090 (II) | MT | | 83,30 |
| Lupranol® 2047 (I) | MT | 1,00 | |
| Lupranol® 2047 (II) | MT | | 1,00 |
| Lupranol® 4800 (I) | MT | 7,00 | |
| Lupranol® 4800 (II) | MT | | 7,00 |
| Wasser | MT | 3,80 | 3,80 |
| Tegostab® B 8715 | MT | 0,40 | 0,40 |
| Lupranat® N211 | MT | 0,50 | 0,50 |
| Lupranat® N202 | MT | 0,35 | |
| Dabco® 2025 | MT | 0,50 | |
| Katalysator A | MT | | 4,00 |
| Iso 135/44 | Index | 100 | 100 |

(fortgesetzt)

| Formulierung | | Vergleichsbeispiel 3 | Beispiel 6 |
|---|---|---|---|
| Verarbeitungsverhalten | | | |
| Startzeit | s | 11 | 10 |
| Steigzeit | s | 88 | 98 |
| Rohdichte, Kem | $kg/m^3$ | 46 | 44.9 |
| Bruchdehnung | % | 104 | 110 |
| Zugfestigkeit | kPa | 128 | 134 |
| Druckverformungsrest | % | 3,7 | 4,3 |
| nach Feuchtwärmelagerung | % | 39 | 38,8 |
| Rückprallelastizität | % | 56 | 56,4 |
| Stauchhärte 40% | kPa | 4,9 | 5 |
| Gasförmige und kondensierbare Emissionen | | | |
| VOC nach DC-PB VWL 709 | | | |
| Insgesamt | ppm | 188 | 39 |
| 1,4-Diacabicyclo (2.2.2)oktan | ppm | 122 | 0 |
| Diphenylaminderivate | ppm | 2 | 0 |
| Fogging nach DC-PB VWL 709 | | | |
| Insgesamt | ppm | 64 | 48 |
| Diphenylaminderivate | ppm | 11 | 0 |

Erläuterungen zur Tabelle

| | |
|---|---|
| Lupranol® 2080 | nicht reaktives Polyetherol mit einer Hydroxylzahl von 48 mg KOH/g und einer Viskosität von 540 mPa·s (BASF AG), stabilisiert mit Irganox® 1135 und 5057 |
| Lupranol® 2082 | nicht reaktives Polyetherol mit einer Hydroxylzahl von 48 mg KOH/g und einer Viskosität von 540 mPa·s (BASF AG), stabilisiert mit Irgastab® PUR 68 |
| Lupranol® 2047 (I) | reaktives Zellöffnerpolyol mit einer Hydroxylzahl von 42 mg KOH/g und einer Viskosität von 950 mPa·s (BASF AG), stabilisiert mit Irganox® 1135 und 5057 |
| Lupranol® 2047 (II) | reaktives Zellöffnerpolyol mit einer Hydroxylzahl von 42 mg KOH/g und einer Viskosität von 950 mPa·s (BASF AG), stabilisiert mit Irgastab® PUR 68 |
| Lupranol® 2090 (I) | reaktives Polyetherol mit einer Hydroxylzahl von 28 mg KOH/g und einer Viskosität von 1125 mPa·s (BASF AG), stabilisiert mit Irganox® 1135 und 5057 |
| Lupranol® 2090 (II) | reaktives Polyetherol mit einer Hydroxylzahl von 28 mg KOH/g und einer Viskosität von 1125 mPa·s (BASF AG), stabilisiert mit Irgastab® PUR 68 |
| Lupranol® 2095 (I) | reaktives Polyetherol mit einer Hydroxylzahl von 35 mg KOH/g und einer Viskosität von 850 mPa·s (BASF AG), stabilisiert mit Irganox® 1135 und 5057 |
| Lupranol® 2095 (II) | reaktives Polyetherol mit einer Hydroxylzahl von 35 mg KOH/g und einer Viskosität von 850 mPa·s (BASF AG), stabilisiert mit Irgastab® PUR 68 |

| | |
|---|---|
| Lupranol® 4890 (I) | reaktives Polymerpoylol mit einer Hydroxylzahl von 19,8 mg KOH/g und einer Viskosität von 9000 mPa·s (BASF AG) und einem Feststoffgehalt von 45 Gew.-%, stabilisiert mit Irganox® 1135 und 5057 |
| Lupranol® 4890 (II) | reaktives Polymerpoylol mit einer Hydroxylzahl von 19,8 mg KOH/g und einer Viskosität von 9000 mPa·s (BASF AG) und einem Feststoffgehalt von 45 Gew.%, stabilisiert mit Irgastab® PUR 68 |
| Lupranol® 4895 (I) | reaktives Polymerpoylol mit einer Hydroxylzahl von 19,8 mg KOH/g und einer Viskosität von 10.300 mPa·s (BASF AG) und einem Feststoffgehalt von 45 Gew.-%, stabilisiert mit Irganox® 1135 und 5057 |
| Lupranol® 4895 (II) | reaktives Polymerpoylol mit einer Hydroxylzahl von 19,8 mg KOH/g und einer Viskosität von 10.300 mPa·s (BASF AG) und einem Feststoffgehalt von 45 Gew.-%, stabilisiert mit Irgastab® PUR 68 |
| Lupragen® N201: | 1,4-Diazabicyclo-[2,2,2]-octan (33%) in Dipropylenglykol (67%), (BASF AG) |
| Lupragen® N202: | 1,4-Diazabicyclo-[2,2,2]-octan (25%) in 1,4-Butandiol (75%), (BASF AG) |
| Lupragen® N206: | Bis-(2-Dimethylaminoethyl)ether (70%) in Dipropylenglykol (30%), (BASF AG) |
| Lupragen® N211: | Dimethylaminopropylamin (BASF AG) |
| DABCO® 2025: | Aminkatalysator (Air Products) |
| Kosmos® 29: | Zinn-II-Salz der Ethylhexansäure (Degussa AG) |
| Tegostab® B 4900: | Silikonstabilisator (Degussa AG) |
| Tegostab® B 8715: | Silikonstabilisator (Degussa AG) |
| Silybyk® 9700 | Silikonstabilisator (Byk Chemie) |
| DEOA | Diethanolamin |
| Ortegol® 204 | Vernetzeradditiv für HR-Blockschäume (Degussa AG) |
| Lupranaf® T 80 A: | 2,4-/2,6-Toluylendiisocyanatgemisch im Verhältnis 80:20 (BASF Aktiengesellschaft) |
| Iso 135/44 | MDI-Präpolymer mit einem NCO-Gehalt von 27,5 % und einer Viskosität von 520 mPa·s |

Bei Lupranol® , Lupragen® und Lupranat® handelt es sich um Marken der BASF AG.

## Patentansprüche

**1.** Verfahren zur Herstellung von Polyurethan-Weichschaumstoffen mit verringerter Emission durch Umsetzung von

a) Polyisocyanaten mit
b) Verbindungen mit mindestens zwei mit Isocyanatgruppen reaktiven Wasserstoffatomen in Anwesenheit von
c) Katalysatoren,

**dadurch gekennzeichnet, dass** als Katalysator c) mindestens eine Verbindungen der allgemeinen Formel (I)

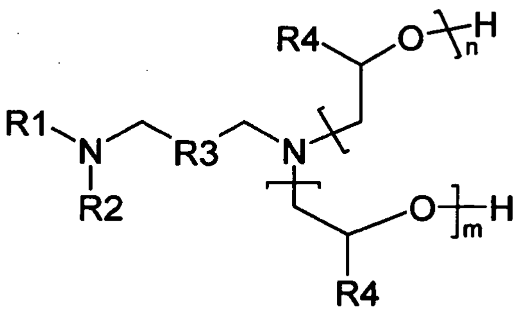

(I)

mit

R1, R2 = $-C_aH_{2a+1}$ mit a =1 - 4 für acylische Gruppen
R1-R2 = $-C_bH_cN_d-$ mit b = 3 - 7, c = 6 - 14, d = 0 - 2 für cyclische Gruppen
R3 = $C_eH_fO_g$ mit e = 0-4, f = 0-8, g = 0-2
R4 = -H, $-CH_3$, $-C_2H_5$
n, m = gleich oder verschieden 1 - 5.

eingesetzt wird, und dass die Verbindungen mit mindestens zwei mit Isocyanatgruppen reaktiven Wasserstoffatomen b) Stabilisatoren gegen thermooxidativen Abbau enthalten, die frei von Aminogruppen sind, und diese aus 20 bis 90 Gew.-% sterisch gehinderten Phenolderivaten und 10 bis 70 Gew.-% Benzofuran-2-on-derivaten bestehen.

2. Verfahren nach Anspruch 1, **dadurch gekennzeichnet, dass** die Katalysatoren c) neben den Verbindungen der allgemeinen Formel (I) weitere Verbindungen mit mindestens einer tertiären Aminogruppe und mindestens einer mit Isocyanatgruppen reaktiven Gruppe enthalten.

3. Verfahren nach Anspruch 1, **dadurch gekennzeichnet, dass** die in Kombination mit den Katalysatoren der allgemeinen Formel (I) eingesetzten Katalysatoren als mit Isocyanatgruppen reaktive Gruppen Hydroxyl- und/oder Aminogruppen aufweisen.

4. Verfahren nach Anspruch 1, **dadurch gekennzeichnet, dass** die in Kombination mit den Katalysatoren der allgemeinen Formel (I) eingesetzten Katalysatoren als mit Isocyanatgruppen reaktive Gruppen Hydroxylgruppen aufweisen.

5. Verfahren nach Anspruch 1, **dadurch gekennzeichnet, dass** die in Kombination mit den Katalysatoren der allgemeinen Formel (I) eingesetzten Katalysatoren ausgewählt sind aus der Gruppe, enthaltend Dimethylaminoethanol, N,N-Dimethyl-N',N'-di(2-hydroxypropyl)-1,3-diaminopropan, N,N-Dimethylaminopropylamin, N,N'-Trimethyl-N-hydroxyethyl-bis(aminoethyl)ether, 6-Dimethylaminoethyl-1-hexanol, N-(2-Hydroxypropyl)imidazol, N-(3-Aminopropyl)imidazol, Aminopropyl-2-methyl-imidazol, N,N,N'-Trimethylaminoethanolamin, 2-(2-(N,N-Dimethylaminoethoxy)ethanol, N-(Dimethyl-3-aminopropyl)harnstoffderivate und Alkylaminooxamide, wie Bis-(N-(N',N'-dimethylaminopropyl))oxamid, Bis-(N-(N',N'-dimethylaminoethyl))oxamid, Bis-(N-(N',N'-Imidazolidinylpropyl))oxamid, Bis-(N-(N',N'-diethylaminoethyl))oxamid, Bis-(N-(N',N'-diethylaminopropyl))-oxamid, Bis-(N-(N',N'-diethylaminoethyl))oxamid, Bis-(N-(N',N'-diethylimino-1-methylpropyl))oxamid, Bis-(N-(3-Morpholinopropylyl))oxamid und deren Umsetzungsprodukte mit Alkylenoxiden.

6. Polyurethan-Weichschaumstoffe, herstellbar nach einem der Ansprüche 1 bis 5, mit einem Gehalt an flüchtigen organischen Verbindungen von < 100 ppm und kondensierbaren Verbindung von < 250 ppm.

7. Verwendungen der Polyurethan-Weichschaumstoffe nach Anspruch 6 in Kraftfahrzeuginnenräumen.

8. Verwendungen der Polyurethan-Weichschaumstoffe nach Anspruch 6 in Matratzen und Möbeln.

## Claims

1. A process for producing flexible polyurethane foams having reduced emissions by reacting

   a) polyisocyanates with
   b) compounds having at least two hydrogen atoms which are reactive toward isocyanate groups in the presence of
   c) catalysts,

   wherein at least one compound of the general formula (I)

   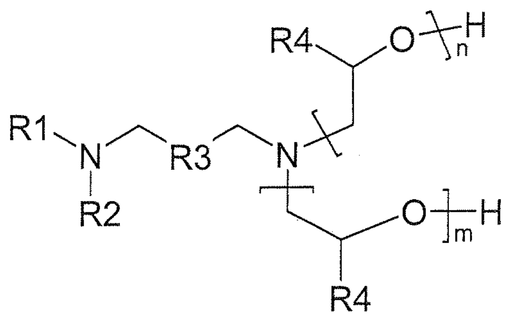

   (I)

   where

   R1, R2 = $-C_aH_{2a+1}$ where a = 1 - 4 in the case of acyclic groups
   R1-R2 = $-C_bH_cN_d-$ where b = 3 - 7, c = 6 - 14, d = 0 - 2 in the case of cyclic groups
   R3 = $C_eH_fO_g$ where e = 0 - 4, f = 0 - 8, g = 0 - 2
   R4 = -H, $-CH_3$, $-C_2H_5$
   n, m are identical or different and are each 1 - 5,

   is used as catalyst c), and wherein the compounds b) having at least two hydrogen atoms which are reactive toward isocyanate groups comprise stabilizers against thermooxidative degradation which are free of amino groups, and these comprise 20 to 90% by weight of sterically hindered phenol derivatives and 10 to 70% by weight of benzofuran-2-one derivatives.

2. The process according to claim 1, wherein the catalysts c) comprise the compounds of the general formula (I) together with further compounds having at least one tertiary amino group and at least one group which is reactive toward isocyanate groups.

3. The process according to claim 1, wherein the catalysts used in combination with the catalysts of the general formule (I) have hydroxyl and/or amino groups as groups which are reactive toward isocyanate groups.

4. The process according to claim 1, wherein the catalysts used in combination with the catalysts of the general formula (I) have hydroxyl groups as groups which are reactive toward isocyanate groups.

5. The process according to claim 1, wherein the catalysts used in combination with the catalysts of the general formula (I) are selected from the group comprising dimethylaminoethanol, N,N-dimethyl-N',N'-di(2-hydroxypropyl)-1,3-diaminopropane, N,N-dimethylaminopropylamine, N,N'-trimethyl-N-hydroxyethbis (aminoethyl) ether, 6-dimethylaminoethyl-1-hexanol, N-(2-hydroxypropyl)imidazole, N-(3-aminopropyl)imidazole, aminopropyl-2-methylimidazole, N, N,N'-trimethylaminoethanolamine, 2-(2-(N,N-dimethylaminoethoxy)ethanol, N-(dimethyl-3-aminopropyl)urea derivatives and alkylaminooxamides such as bis(N-(N',N'-dimethylaminopropyl))oxamide, bis(N-(N',N'-dimethylaminoethyl))-oxamide, bis (N-(N',N'-imidazolidinylpropyl))oxamide, bis(N-(N',N'-diethylaminoethyl))oxamide, bis(N-(N',N'-diethylaminopropyl))oxamide, bis(N-(N',N'-diethylaminoethyl))oxamide, bis(N-(N',N'-diethylimino-1-methylpropyl)) oxamide, bis(N-(3-morpholinopropylyl))oxamide and their reaction products with alkylene oxides.

6. A flexible polyurethane foam which can be prepared according to any of claims 1 to 5 and has a content of volatile

organic compounds of < 100 ppm and of condensable compounds of < 250 ppm.

7. The use of the flexible polyurethane foams according to claim 6 in motor vehicle interiors.

8. The use of the flexible polyurethane foams according to claim 6 in mattresses and furniture.

**Revendications**

1. Procédé de préparation de mousses souples de polyuréthanne avec des émissions réduites par mise en réaction de :

a) polyisocyanates avec
b) des composés dotés d'au moins deux atomes d'hydrogène réactifs aux groupes isocyanate en présence de
c) catalyseurs,

**caractérisé en ce que** l'on utilise comme catalyseur c) au moins un composé de formule générale (I) :

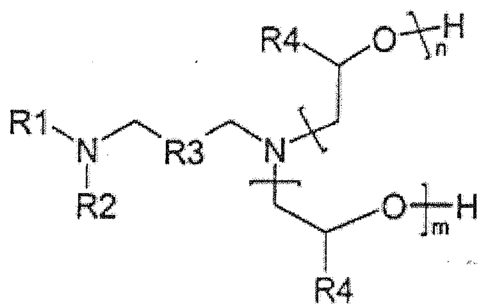

(I)

avec

R1, R2 = $-C_aH_{2a+1}$ avec a = 1 - 4 groupes acycliques
R1-R2 = $-C_bH_cN_d-$ avec b = 3 - 7, c = 6 - 14, d = 0 - 2 groupes cycliques
R3 = $C_eH_fO_g$ avec e = 0 - 4, f = 0 - 8, g = 0 - 2
R4 = -H, $-CH_3$, $-C_2H_5$
n, m sont identiques ou différents et = 1 - 5,

et **en ce que** les composés dotés d'au moins deux atomes d'hydrogène réactifs aux groupes isocyanate b) contiennent des stabilisateurs contre la dégradation thermo-oxydative qui sont exempts de groupes amino, et ceux-ci se composent de 20 à 90 % en poids de dérivés de phénol stériquement encombrés et de 10 à 70 % en poids de dérivés de benzofuran-2-one.

2. Procédé selon la revendication 1, **caractérisé en ce que** les catalyseurs c) contiennent, outre les composés de formule générale (I) d'autres composés avec au moins un groupe amino tertiaire et au moins un groupe réactif aux groupes isocyanate.

3. Procédé selon la revendication 1, **caractérisé en ce que** les catalyseurs utilisés en combinaison avec les catalyseurs de formule générale (I) présentent des groupes hydroxyle et/ou amino comme groupes réactifs aux groupes isocyanate.

4. Procédé selon la revendication 1, **caractérisé en ce que** les catalyseurs utilisés en combinaison avec les catalyseurs de formule générale (I) présentent des groupes hydroxyle comme groupes réactifs aux groupes isocyanate.

5. Procédé selon la revendication 1, **caractérisé en ce que** les catalyseurs utilisés en combinaison avec les catalyseurs de formule générale (I) sont sélectionnés dans le groupe contenant le diméthylaminoéthanol, le N,N-diméthyl-N', N'-di(2-hydroxypropyl)-1,3-diaminopropane, la N,N-diméthylaminopropylamine, le N,N'-triméthyl-N-hydroxyéthyl-bis(aminoéthyl)éther, le 6-diméthylaminoéthyl-1-hexanol, le N-(2-hydroxypropyl)imidazole, le N-(3-aminopropyl)imidazole, l'aminopropyl-2-méthylimidazole, la N,N,N'-triméthylaminoéthanolamine, le 2-(2-(N,N-diméthylaminoéthoxy)éthanol, les dérivés de N-(diméthyl-3-aminopropyl)-urée et les alkylaminooxamides comme le bis-(N-(N',N'-diméthylaminopropyl))oxamide, le bis-(N-(N',N'-diméthylaminoéthyl))oxamide, le bis-(N-(N',N'-imidazolidinylpropyl))oxamide, le bis-(N-(N',N'-diéthylaminoéthyl))oxamide, le bis-(N-(N',N'-diéthylaminopropyl))oxamide, le bis-(N-(N',N'-diéthylaminoéthyl))oxamide, le bis-(N-(N',N'-diéthylimino-1-méthylpropyl))oxamïde, le bis-(N-(3-morpholinopropylyl)oxamide et leurs produits de réaction avec des alkylèneoxydes.

**6.** Mousses souples de polyuréthanne à préparer selon l'une des revendications 1 à 5, avec une teneur en composés organiques volatils de < 100 ppm et un composé condensable de < 250 ppm.

**7.** Utilisation des mousses souples de polyuréthanne selon la revendication 6 dans des habitacles de véhicules automobiles.

**8.** Utilisation de mousses souples de polyuréthanne selon la revendication 6 dans des matelas et des meubles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 451826 A
- EP 677540 A
- DE 10156014